# DEMANDE DE BREVET EUROPEEN

(11) **EP 1 298 265 A1**
(43) Date de publication de la demande: **02.04.2003**
(21) Numéro de dépôt: 01810943.9
(22) Date de dépôt: 27.09.2001
(51) Int. Cl.: E04F 13/14, E04F 13/08, F16B 13/08

(54) **Système d'attache pour panneaux composites**

(71) Demandeur: Inveco SRL, 89016 Gioia Tauro RC (IT)
(72) Inventeur: Vetrano, Vincenzo, 6942 Savosa (CH)
(74) Mandataire: Savoye, Jean-Paul

(57) **Abrégé**

Un système d'attache pour panneaux composites appartenant à la catégorie des panneaux comprenant une dalle frontale (10) de finition en pierre naturelle ou autre matériau, d'une épaisseur adéquate, et une couche de support multicellulaire (11). Le système d'attache comporte un corps creux de forme oblongue, pouvant être inséré dans un trou de fixation du panneau composé par le support multicellulaire (11) et la dalle frontale (10). Le corps creux du système d'attache comprend une tige tubulaire présentant des ailettes extérieures servant de fixation au support multicellulaire (11), et une tête expansible pour fixation à la dalle frontale (10), reliés par un prolongement flexible de la tête tubulaire. Le système d'attache comporte en outre un dispositif d'expansion qui se visse à la tige tubulaire, destiné à pénétrer dans la tête de fixation pour la bloquer dans le logement du panneau frontal (10).

## Description

### FONDEMENT DE L'INVENTION

La présente invention se rapporte à un système d'attache pour panneaux composites ou à plusieurs couches appartenant à la catégorie des panneaux comprenant une fine dalle frontale en pierre naturelle ou autre matériau de fini de surface d'une épaisseur de 5 ou 6 mm par exemple, et un support multicellulaire constitué par exemple d'une couche nid d'abeille en aluminium ou autre matériau semblable, d'une épaisseur nettement supérieure à celle de la dalle frontale, de manière à doter le panneau ainsi obtenu de la largeur nécessaire tout en conservant une structure extrêmement légère.

Comme on le sait, les qualités des panneaux composites ayant une dalle de surface en pierre naturelle sont particulièrement appréciées dans la construction de murs, comme revêtement, faux plafonds et pour couvrir d'autres surfaces.

L'utilisation de la pierre naturelle est actuellement très limitée, tant en raison de son coût que de son poids et parce qu'une dalle de pierre se fracture facilement vu son épaisseur extrêmement faible.

Afin de remédier à ces inconvénients, on a proposé différents panneaux composites ayant une structure stratifiée et comprenant une mince dalle frontale, fixée par un support multicellulaire nid d'abeilles, d'une épaisseur nettement supérieure à celle de la dalle frontale, de manière à fournir au panneau ainsi obtenu non seulement les caractéristiques esthétiques requises, mais aussi les caractéristiques mécaniques de légèreté, résistance et longévité.

Les panneaux composites comme ceux cités ci-dessus sont actuellement fabriqués avec une fine dalle en pierre naturelle fixée à la structure multicellulaire de soutien au moyen d'un adhésif adéquat comme une résine thermodurcissable, par exemple une résine phénylique, epoxyde ou polyester, en intercalant une mince feuille de matériau résistante capable d'obturer ses propres cellules entre le support multicellulaire et la dalle en pierre naturelle.

Etant donné que les résines utilisées sont sujettes à un vieillissement naturel, sans parler du risque que la dalle ne se décolle accidentellement lorsque le panneau est soumis aux intempéries ou à des changements de température, il est évident que les panneaux composites de ce type sont très difficiles à mettre en oeuvre ou requièrent des précautions spéciales.

En outre, la fixation des panneaux à une structure de support s'effectue par des moyens purement conventionnels, difficiles à mettre en oeuvre, qui ne sont pas toujours garants d'un ancrage sûr et stable du panneau.

### BUTS DE L'INVENTION

Le but général de la présente invention est de fournir un système d'attache pour panneaux composites appartenant à la catégorie des panneaux comprenant une fine dalle frontale et une couche de support multicellulaire. Ledit système d'attache permet d'obtenir une jonction mécanique robuste entre les différentes couches qui composent le panneau et permet également une pose facile et une fixation du panneau lui-même à une structure de support.

Un deuxième but poursuivi par la présente invention est de fournir un système d'attache comme décrit ci-dessus, au moyen duquel il est possible de fixer des dalles frontales en pierre naturelle et/ou en autre matériau, d'une épaisseur quelconque, et d'assurer dans tous les cas un ancrage sûr de la dalle frontale au support multicellulaire, tout en camouflant tout le système d'attache.

Un troisième but poursuivi par la présente invention est de fournir un système d'attache au moyen duquel il est possible de régler la force d'ancrage de la dalle frontale, en l'adaptant au poids et aux caractéristiques de la dalle en question, sans risque de la briser et/ou de la fissurer.

### BREVE DESCRIPTION DE L'INVENTION

Ces buts, ainsi que d'autres, sont possibles à atteindre au moyen d'un système d'attache pour les panneaux composites appartenant à la catégorie des panneaux comprenant une mince dalle frontale, en pierre naturelle ou en autre matériau, et une couche de support multicellulaire d'une épaisseur nettement supérieure à celle de la dalle frontale. Le système d'attache est quant à lui constitué d'un corps creux pouvant être inséré dans des trous de positionnement alignés dans l'axe prévus dans le panneau composite que constituent le support multicellulaire et la dalle frontale, et comprenant systématiquement les éléments suivants :
- une tige tubulaire pourvue d' ailettes extérieures permettant l'ancrage de la couche de support multicellulaire ;
- une tête de fixation à la dalle frontale, rendue radialement expansible par une série de fissures longitudinales. Cette tête de fixation possédant une surface intérieure en forme de cône ;
- une partie intermédiaire flexible, servant à relier la tête de fixation et la tige tubulaire ; et
- un dispositif d'expansion de la tête de fixation, dont une partie peut être vissée dans la tige tubulaire, conçu de manière à pénétrer dans la tête de fixation pour l'écarter radialement contre la surface intérieure du trou de positionnement du panneau frontal.

Suivant un procédé de fabrication préférentiel, le dispositif d'expansion consiste en un élément en forme de sphère dans la tête de fixation et un élément propulseur de la sphère à l'intérieur de la tige tubulaire.

L'élément propulseur sera de préférence un goujon fileté qui se visse à l'intérieur de la tige tubulaire. De plus, ce goujon de propulsion peut faire saillie à l'arrière du corps tubulaire du dispositif, servant ainsi à ancrer le panneau à une structure de support.

### BREVE DESCRIPTION DES DESSINS

Les caractéristiques présentes et futures du système d'attache pour panneaux composites suivant l'invention résulteront surtout de la description qui suit ; avec renvoi aux schémas en annexe sur lesquels :
La fig. 1 est une vue sur plan du panneau de la fig. 2 dont une partie a été amputée ;
la fig. 2 est une vue latérale d'un panneau composite ;
la fig. 3 est une vue latérale du système d'attache suivant l'invention ;
la fig. 4 est une vue du haut du système d'attache de la figure 3 ;
la fig. 5 est une coupe longitudinale suivant la ligne 5-5 de la figure 4 ;
la fig. 6 est une vue de l'élément propulseur.

### DESCRIPTION DETAILLEE DE L'INVENTION

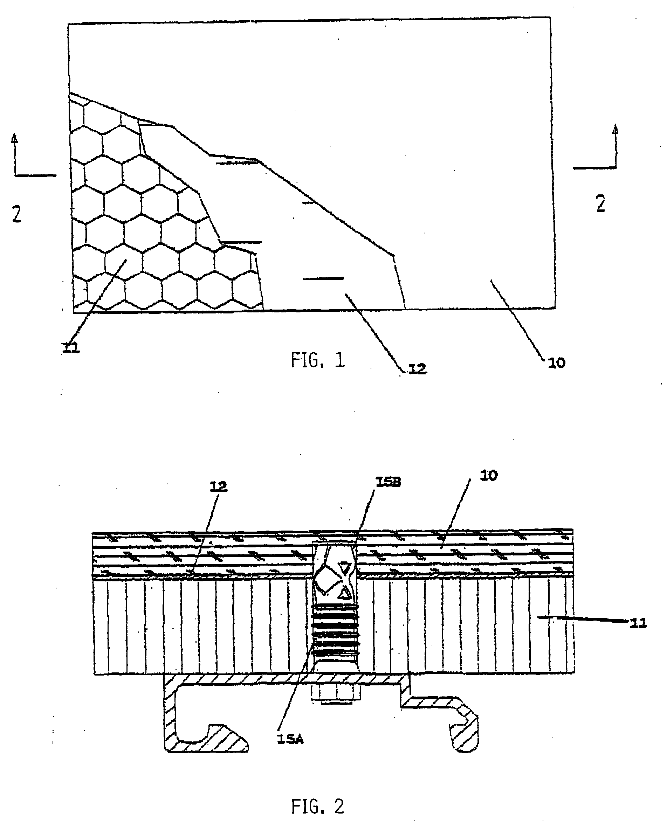

Les figures 1 et 2 montrent un panneau composite générique comprenant une dalle frontale 10. par exemple en pierre naturelle, d'une épaisseur relativement fine - comprise entre 5 et 7 mm - et une couche de support multicellulaire 11 faite par exemple d'un nid d'abeille en aluminium ou autre matériau semblable, ayant une épaisseur nettement supérieure à celle de la dalle 10 afin de fournir au panneau ainsi obtenu la résistance mécanique et structurelle nécessaire.

Une fine feuille 12 de matériau résistant est insérée entre la dalle 10 et le support multicellulaire 11 de manière à obturer les cellules de ce dernier ; une seconde feuille de matériau peut en outre être prévue sur le côté opposé au support multicellulaire 11.

Le matériau multicellulaire fait de feuilles imprégnées de résine, convenant pour la fabrication de panneaux stratifiés est normalement déjà disponible dans le commerce.

Le repère 14 sur la fig. 1 montre un système d'attache suivant l'invention permettant de fixer mécaniquement et en toute sécurité la dalle frontale 10 à la couche de support multicellulaire 11.

Quant aux autres figures restantes de 3 à 6, elles décrivent les caractéristiques du système d'attache expansible suivant l'invention.

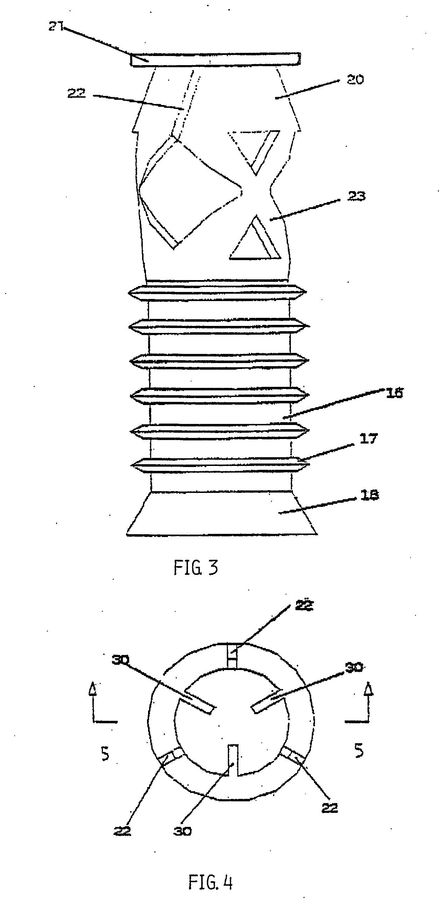

Le système d'attache 14 est constitué d'un corps creux apte à être inséré dans un trou de positionnement 15A du support multicellulaire 11, prolongé par un trou borgne 15B dans la dalle 10, comme illustré par la fig. 3. Plus spécifiquement, le corps creux 14 du système d'attache comprend une tige tubulaire 16 munie d'ailettes extérieures 17, par exemple sous forme d'ailettes annulaires ou d'un filetage apte à s'insérer dans le trou 15A du support multicellulaire 11.

Sur cette figure, le repère 18 indique une partie conique ou élargie à l'extrémité arrière de la tige tubulaire 16, capable d'empêcher un éventuel déport axial du système d'attache sous l'effet du poids de la dalle frontale 10 ou pour d'autres motifs accidentels. Les ailettes 17 constituent un premier moyen d'ancrage du système d'attache au support multicellulaire 11, lorsque ce même dispositif 14 est enfoncé dans le trou 15A pour pénétrer dans le support multicellulaire.

A l'extrémité avant ou opposée à la précédente, le système d'attache comprend une tête creuse radialement expansible 20, constituant un second moyen d'ancrage du dispositif 14 dans le trou 15B de la dalle frontale 10.

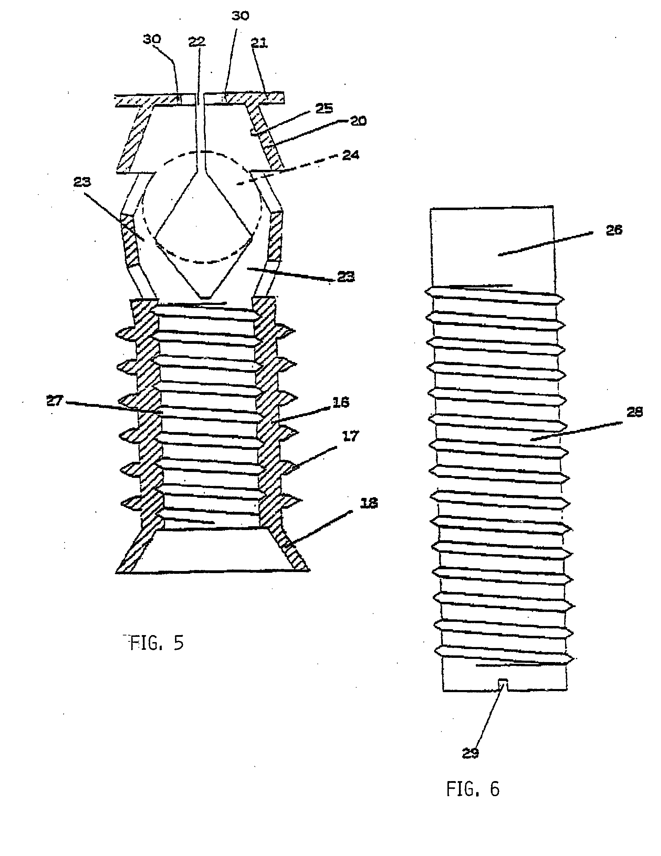

Plus précisément, comme le montre le procédé de fabrication préférentiel des figures 3 et 5, la tête de fixation 20 à la dalle frontale présente une forme conique, terminée au niveau de son bord antérieur par une bride annulaire 21 destinée à faire prise sur le trou borgne 15B de la dalle frontale au moyen d'un élément propulseur adéquat, comme expliqué plus avant.

A cet effet, la tête conique 20 et la bride périphérique 21 sont percées en plusieurs endroits de fentes étroites 22 qui s'étendent longitudinalement à la tête elle-même.

La tête de fixation 20 est donc solidarisée à la tige tubulaire 16 au moyen d'une partie intermédiaire expansible et flexible, constituée par exemple par des tiges croisées 23, ou par un autre moyen similaire, qui se prolongent dans chaque subdivision annulaire de la tête de fixation 20 et de la tige tubulaire 15.

Une solution alternative aux tiges croisées 23 serait de concevoir ou de fabriquer différemment la partie intermédiaire flexible servant à solidariser la tête de fixation 20 et la tige tubulaire 16, à condition qu'elle atteigne le but poursuivi. En fait, la partie flexible 23 de liaison à la tige tubulaire 16 et la tête de fixation 20 à la dalle 10, outre le fait de permettre une expansion de la tête elle-même grâce à sa légère élasticité, est également capable de compenser d'éventuelles sollicitations internes qui peuvent survenir entre la dalle 10 et la structure de support cellulaire 11, en raison de diverses dilations thermiques.

Le système d'attache suivant l'invention comprend également un dispositif d'expansion de la tête de fixation 20 dont la poussée peut être réglée selon les cas. Ce dispositif d'expansion peut être conçu de quelque façon que ce soit, à condition d'être en mesure d'exercer une poussée axiale sur la surface conique interne de la bride 21 qui s'accroche à la surface interne du trou 15B.

A titre d'exemple, le dispositif d'expansion de la tête 20 pourrait être constitué par un élément fileté qui se visse dans la tige tubulaire 16 du dispositif, terminé à son extrémité antérieure par une surface conique ou semi-sphérique capable d'entrer en contact avec la surface conique 25 à l'intérieur de la tête 20.

Suivant la forme de fabrication préférentielle illustrée par les figures 3 et 5, le dispositif d'expansion de la tête de fixation 20 comprend un écarteur 24 interne à la tête 20, par exemple sous forme d'une sphère d'un diamètre compris entre le diamètre maximum et le diamètre minimum de la surface conique intérieure 25 de la tête 20.

Le dispositif d'expansion illustré comprend en outre un goujon fileté 26, figure 6, ou un autre élément propulseur équivalent qui peut être vissé à la tige tubulaire 16 du système d'attache.

La tige tubulaire 16 du système d'attache présente donc un filetage intérieur 27 correspondant au filetage 28 de l'élément propulseur 26, dont l'extrémité arrière se prolonge sur toute la longueur, s'arrêtant à une certaine distance de l'extrémité antérieure.

En fonction d'une autre caractéristique du système d'attache objet de l'invention, le goujon fileté 26, outre le fait de servir d'élément propulseur, sert également à ancrer le panneau à une structure de support, comme illustré à la figure 1, par exemple. A cet effet, l'élément propulseur 26 présente une longueur axiale supérieure à celle du corps creux 14 du système d'attache de façon à dépasser de l'extrémité postérieure 18.

Le repère 29 sur la figure 3 montre aussi une coupe transversale à l'extrémité postérieure du goujon 26 pour l'insertion d'un outil de vissage adéquat.

Enfin, le repère 30 sur les figures 4 et 5 représente des doigts radiaux à l'extrémité supérieure de la tête conique 20, coplanaires à la bride radiale 21 afin d'éviter un glissement accidentel de la sphère 24.

L'utilisation du système d'attache suivant l'invention se décrit brièvement comme suit : après avoir percé les trous 15A et 15B dans le support multicellulaire 11 et la dalle de pierre 10, et après avoir superposé le support multicellulaire 11 et la dalle 10 en insérant un éventuel liant, on procède à l'introduction du système 14, sans l'élément propulseur 26, dans les trous 15A et 15B alignés dans l'axe en poussant fortement sur la tige tubulaire de façon à ce que les ailettes fassent prise sur le support multicellulaire 11, insérant la tête 20 dans le trou borgne 15B de la dalle frontale 10.

A ce stade, on introduit l'élément propulseur 26 en le vissant à la tige tubulaire 16 jusqu'à venir buter sur la sphère 24 à l'intérieur de la tête 20. En vissant ensuite le goujon fileté 26, la sphère 24 se trouve propulsée contre la surface conique interne 25 de la tête 20 qui s'écarte radialement et écrase la bride 21 contre la surface intérieure du trou 15B.

La dalle 10 et le support multicellulaire se trouvent alors étroitement liés entre eux grâce au système d'attache 14. Les cellules de la structure alvéolaire qui correspondent au trou 15A peuvent ensuite être bouchées à l'aide d'une résine adéquate.

Des présentes explications et les schémas ci-joints, il ressort clairement que le système d'attache pour panneaux composites décrit ici convient particulièrement bien pour solidariser mécaniquement la dalle de finition frontale du panneau et un substrat de support postérieur ayant une structure multicellulaire, et permet également de solidariser de manière sûre et stable les différentes couches du panneau. Le système d'attache s'avère particulièrement indiqué dans le cas de panneaux pourvus d'une dalle frontale d'un poids considérable, réalisée en pierre naturelle par exemple.

Il est de toute façon entendu que ce qui a été dit et illustré en référence aux schémas en annexe a été donné à titre purement indicatif concernant un procédé de fabrication préférentiel de l'invention, étant bien entendu que d'autres modifications ou variantes pourraient être apportées sans que l'on s'éloigne pour autant des présentes revendications.

## Revendications

1. Système d'attache pour panneaux composites appartenant à la catégorie des panneaux comprenant une mince dalle frontale en pierre naturelle ou autre matériau, et une couche de support multicellulaire d'une épaisseur nettement supérieure à celle de la dalle frontale, ledit système d'attache étant constitué d'un corps creux pouvant être introduit dans les trous de fixation alignés dans l'axe prévus dans le panneau composite que constituent le support multicellulaire et la dalle frontale, **caractérisé en ce qu'**il comprend:
- une tige tubulaire présentant des ailettes extérieures servant à fixer la couche de support multicellulaire ;
- une tête de fixation à la dalle frontale, capable de s'écarter radialement grâce à une série de fentes longitudinales, cette tête de fixation présentant une surface intérieure en forme de cône ;
- une partie intermédiaire flexible servant à solidariser la tête de fixation et la tige tubulaire ; et
- un élément propulseur de la tête de fixation ayant une partie vissable dans la tige tubulaire, et conçu de manière à pénétrer dans la tête de fixation pour l'écarter radialement contre la surface intérieure du trou de fixation du panneau frontal.

2. Système d'attache suivant la revendication 1, **caractérisé par le fait que** les ailettes extérieures de la tige tubulaire sont constituées par plusieurs ailettes de forme annulaire.

3. Système d'attache suivant la revendication 1, **caractérisé par le fait que** les ailettes extérieures de la tige tubulaire sont constituées par un filetage.

4. Système d'attache suivant la revendication 1, **caractérisé par le fait que** la tête de fixation possède au moins une bride annulaire.

5. Système d'attache suivant la revendication 1, **caractérisé par le fait que** le dispositif d'expansion de la tête de fixation comprend un écarteur à l'intérieur de la tête de fixation et un organe de propulsion qui s'étend axialement dans la tige tubulaire du système d'attache.

6. Système d'attache suivant la revendication 5, **caractérisé par le fait que** l'écarteur est constitué par un élément sphérique.

7. Système d'attache suivant la revendication 5, **caractérisé par le fait que** l'organe propulseur est un goujon fileté.

8. Système d'attache suivant la revendication 7, **caractérisé par le fait que** ledit goujon fileté se prolonge en dehors du corps du système d'attache, du côté opposé à celui de la tête de fixation.

9. Système d'attache suivant la revendication 1, **caractérisé par le fait que** la tête de fixation au panneau frontal possède une forme conique qui converge dans l'axe.
